# EUROPÄISCHE PATENTSCHRIFT

(11) **EP 1 809 502 B1**
(45) Veröffentlichungstag und Bekanntmachung des Hinweises auf die Patenterteilung: **26.01.2011**
(21) Anmeldenummer: 05808541.6
(22) Anmeldetag: 01.11.2005
(51) Int. Cl.: B60J 5/10

(54) **HECKKLAPPE FÜR EIN KFZ SOWIE EIN KFZ MIT EINER SOLCHEN HECKKLAPPE**
TAILGATE FOR A MOTOR VEHICLE AND MOTOR VEHICLE PROVIDED WITH SAID TAILGATE
HAYON POUR AUTOMOBILE ET AUTOMOBILE EQUIPEE D'UN TEL HAYON

(30) Priorität: 03.11.2004 DE 102004052891
(43) Veröffentlichungstag der Anmeldung: 25.07.2007
(73) Patentinhaber: Wilhelm Karmann GmbH, 49084 Osnabrück (DE)
(72) Erfinder: BUNSMANN, Winfried, 49143 Bissendorf (DE)
(74) Vertreter: Kronthaler, Schmidt & Coll.
(86) Internationale Anmeldenummer: PCT/DE2005/001949
(87) Internationale Veröffentlichungsnummer: WO 2006/047995

(56) Entgegenhaltungen:
- EP-A- 1 234 754
- EP-A- 1 369 274
- DE-C1- 19 537 594
- DE-U1- 9 109 578
- FR-A- 2 738 783
- US-A1- 2003 085 594

## Beschreibung

Die Erfindung betrifft eine Heckklappe gemäß dem Oberbegriff des Anspruchs 1. Die Erfindung betrifft weiter ein Kraftfahrzeug mit einer solchen Heckklappe, gemäß Anspruch 7.

Aus der DE 195 37 594 Cl, von der in Oberbegriff des Anspruchs 1 der vorliegenden Anmeldung ausgegangen wird, ist eine Heckklappe bekannt, aus deren unterem Heckklappenkörper nach oben ein umlaufender Rahmen vorsteht, der zusammen mit dem Oberrand des Heckklappenkörpers eine Öffnung umschließt, auf die eine Heckscheibe aufgesetzt ist. Der Randbereich der Heckscheibe ist mit einem nicht transparenten Band versehen, der den Rahmen visuell abdeckt und der im Bereich einer an dem Oberrand der Heckscheibe innenseitig angebrachten Zusatzbremsleuchte über deren gesamte Leuchtfläche gerastert ist, so dass das Licht der Zusatzbremsleuchte austreten kann.

Aus dem DE 91 09 578.6 U ist eine innenseitig im oberen Bereich einer Heckscheibe angebrachte Zusatzbremsleuchte bekannt, die über Lichtleiter mit wenigstens einer der seitlichen Bremsleuchten verbunden ist.

Der Erfindung liegt die Aufgabe zu Grunde, eine variabel nutzbare Heckklappe für ein Kraftfahrzeug zu schaffen, die bezüglich des Designs des Fahrzeugs Freiheiten ermöglicht.

Diese Aufgabe wird mit einer Heckklappe gemäß dem Anspruch 1 gelöst.

Bei der erfindungsgemäßen Heckklappe ist die in ihrem oberen Bereich mit der Zusatzbremsleuchte versehene Heckscheibe in den Heckklappenkörper absenkbar, wobei die Absenkbarkeit zumindest bei fahrenden Fahrzeug derart beschränkt ist, dass der mit der Zusatzbremsleuchte versehene obere Bereich aus dem Heckklappenkörper nach oben vorsteht. Auf diese Weise ist gewährleistet, dass das gesetzliche Erfordernis der gegenüber den seitlichen Bremsleuchten hochgesetzten Zusatzbremsleuchte ständig erfüllt ist.

Die Unteransprüche 2 bis 6 sind auf vorteilhafte Weiterbildungen und Ausführungsformen der erfindungsgemäßen Heckklappe gerichtet.

Der Anspruch 7 kennzeichnet ein mit einer erfindungsgemäßen Heckklappe ausgerüstetes Kraftfahrzeug.

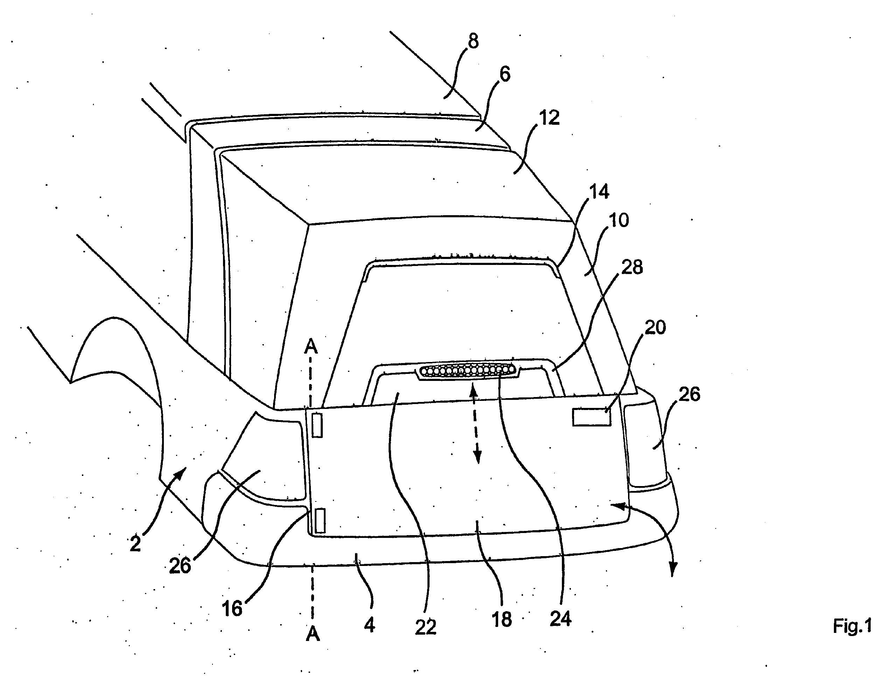

Die Erfindung wird im Folgenden an Hand einer schematischen Zeichnung beispielsweise und mit weiteren Einzelheiten erläutert. Die einzige Figur stellt eine perspektivische Ansicht auf einen Heckbereich eines Kraftfahrzeugs dar.

Der Heckbereich des dargestellten Fahrzeugs weist einen etwa bis zur Brüstung reichenden unteren Wagenkörper 2 auf, der die seitlichen Heckteile mit den Radhäusern und das nach hinten offene Heckabschlussteil enthält, das nach unten durch einen Stoßfänger 4 abgeschlossen wird. Dargestellt sind nur die Außenhautteile des Wagenkörpers 2. Im Abstand vom hinteren Ende ist der Wagenkörper 2 mit einem einen Teil der Außenhaut der Karosserie bildenden Strukturbügel 6 versehen, an den sich nach vorne die nicht im einzelnen dargestellten Seitenfenster oder beispielsweise hintere Seitentüren und das den Passagierraum überspannende Fahrzeugdach 8 anschließen. Nach hinten schließt sich an den Strukturbügel 8 ein vorteilhafterweise abnehmbarer Aufbauteil 10 an, dessen Oberseite 12 einen Teil des Fahrzeugdaches bildet und das nach hinten in einer Öffnung 14 endet.

Im dargestellten Beispiel ist linksseitig am Rand 16 des nach hinten offenen Wagenkörpers 2 ein Heckklappenkörper 18 angeschlagen, der um eine etwa senkrechte Achse A-A schwenkbar ist. Ein Griff zum Öffnen und Schließen des Heckklappenkörpers 18 ist mit 20 bezeichnet.

In dem Heckklappenkörper 18 ist in an sich bekannter Weise auf- und abwärts bewegbar eine Heckscheibe 22 aufgenommen, die bei geschlossenem Heckklappenkörper 18 und in ihre voll angehobenen Stellung bewegt dichtend am Rand der Öffnung 14 des Aufbauteils 10 anliegt.

Am oberen Randbereich der Heckscheibe 22 ist eine gesetzlich vorgeschriebene Zusatzbremsleuchte 24 vorgesehen, die sowohl in voll geschlossenen Zustand der Heckscheibe 22 als auch in deren geöffnetem Zustand zumindest bei fahrenden bzw. im Betrieb befindlichem Fahrzeug sich derart oberhalb des Oberrandes des Heckklappenkörpers 18 befindet, dass sie höher positioniert ist als an je einer Seite des Wagenkörpers 2 in an sich bekannter Weise befindliche Leuchten 26, die auch Bremsleuchten enthalten.

Die Heckscheibe 22 kann in unterschiedlichster Weise ausgebildet sein. Beispielsweise kann die Zusatzbremsleuchte 24 einfach auf die Innenseite der Heckscheibe 22 aufgeklebt sein. Die Stromversorgung der Zusatzbremsleuchte 24 kann dann über Leiterbahnen erfolgen, die in eine Folie oder eine Aufdampfung integriert sind, mit der der Rand 28 der Heckscheibe 22 abgedunkelt ist. Alternativ kann die Zusatzbremsleuchte 24 beispielsweise in einen den Rand 28 der Heckscheibe 22 umschließenden oder einseitig haltenden Rahmen integriert sein, wobei die Stromzuleitungen in den Rahmen integriert sind.

Die Auf- und Abbewegbarkeit der Heckscheibe 22 kann grundsätzlich derart beschränkt sein, dass ein Absenken der Heckscheibe 22 in eine Stellung, in der die Zusatzbremsleuchte 24 den Oberrand des Heckklappenkörpers 18 überragt, nicht möglich ist. Alternativ kann die Heckscheibe beispielsweise bei stehendem oder nicht in Betrieb gesetztem Fahrzeug zündung aus) vollständig in den Heckklappenkörper 18 abgesenkt werden, so dass beispielsweise ein Beladen des Fahrzeugs durch die Heckscheibenöffnung hindurch erleichtert ist. Bei Inbetriebsetzen des Fahrzeugs bewegt sich die Heckscheibe dann automatisch in die dargestellte Stellung.

Bei dem dargestellten Fahrzeug ist die Erfüllung der gesetzlichen Vorschriften bezüglich der Bremsleuchten auch bei abgenommenem Aufbauteil 10 sichergestellt, wobei die Heckscheibe quasi als Windschutz nach oben bewegt werden kann.

Die erfindungsgemäße Heckklappe kann auch bei anderen Fahrzeugen, beispielsweise Kombifahrzeugen eingesetzt werden, wobei bezüglich des Designs dadurch, dass die Zusatzbremsleuchte an der absenkbaren Heckscheibe ausgebildet ist, für die Gestaltung des oberen hintern Dachabschlusses große Freiheiten bestehen und dieser hintere Dachabschluss insbesondere sehr flach gestaltet werden kann.

Der Heckklappenkörper 18 kann bei rahmenloser Ausbildung der Heckklappe, d. h. der Gestaltung der Heckklappe derart, dass ihre Strukturfestigkeit nur durch den Heckklappenkörper 18 gegeben ist, auch derart an dem Wagenkörper 2 angeschlagen sein, dass die Heckklappenkörper 18 bei vorteilhafterweise vollständig in ihn eingefahrener Heckscheibe zum Beladen nach hinten abklappbar ist und zum Fahren dann in die in der Figur dargestellte Stellung gebracht wird, wobei die Heckscheibe offen (Stellung wie dargestellt) oder geschlossenen sein kann.

### Bezugszeichen

- 2: Wagenkörper
- 4: Stoßfänger
- 6: Strukturbügel
- 8: Fahrzeugdach
- 10: Aufbauteil
- 12: Oberseite
- 14: Öffnung
- 16: Rand
- 18: Heckklappenkörper
- 20: Griff
- 22: Heckscheibe
- 24: Zusatzbremsleuchte
- 26: Leuchte
- 28: Rand

## Patentansprüche

1. Heckklappe für ein Kraftfahrzeug, enthaltend einen unteren Heckklappenkörper (18), an dem eine Heckscheibe (22) angebracht ist, an deren oberem Bereich eine Zusatzbremsleuchte (24) vorgesehen ist, **dadurch gekennzeichnet, dass** die Heckscheibe (22) in den unteren Heckklappenkörper (18) absenkbar ist, wobei die Heckscheibe zumindest bei fahrendem Fahrzeug nur so weit absenkbar ist, dass ihr mit der Zusatzbremsleuchte (24) versehener oberer Bereich aus dem unteren Heckklappenkörper nach oben vorsteht.

2. Heckklappe nach Anspruch 1, **dadurch gekennzeichnet, dass** die Zusatzbremsleuchte (24) durch Kleben an der Heckscheibe befestigt ist.

3. Heckscheibe nach Anspruch 1 oder 2, **dadurch gekennzeichnet, dass** die Stromversorgung der Bremsleuchte mittels flacher Leiterbahnen erfolgt, die auf den Randbereich der Heckscheibe (22) aufgebracht sind.

4. Heckklappe nach Anspruch 1, **dadurch gekennzeichnet, dass** der aus dem Heckklappenkörper (18) herausbewegbare Randbereich der Heckscheibe (22) einen Rahmen aufweist, in den die Zusatzbremsleuchte (24) integriert ist.

5. Heckklappe nach Anspruch 4, **dadurch gekennzeichnet, dass** Stromversorgungsleitungen für die Zusatzbremsleuchte (24) in den Rahmen integriert sind.

6. Heckklappe nach einem der Ansprüche 1 bis 5, **dadurch gekennzeichnet, dass** ein Festigkeitsträger zum Anschlagen der Heckklappe an einem Fahrzeug nur durch den Heckklappenkörper (18) gebildet ist.

7. Kraftfahrzeug mit einer Heckklappe nach einem der Ansprüche 1 bis 6, enthaltend ein einen hinteren Teil des Fahrzeugdaches und der Fahrzeugseiten bildendes, abnehmbares Aufbauteil (10), welches nach hinten mit einer Öffnung (14) für eine Anlage des Randes (28) der geschlossenen Heckscheibe (22) ausgebildet ist.

## Claims

1. A tailgate for a vehicle, comprising a lower tailgate body (18) to which a rear window (22), provided with an additional stop light (24) on its upper portion, is attached, **characterized in that** the rear window (22) is retractable into the lower tailgate body (18), the rear window, at least when the vehicle is driving, being retractable only to an extent at which its upper portion, which is provided with the additional stop light (24), still protrudes upwards from the lower tailgate body.

2. The tailgate according to claim 1, **characterized in that** the additional stop light (24) is fixed to the rear window by means of adhesive bonding.

3. The rear window according to claim 1 or 2, **characterized in that** the electric power supply of the stop light is carried out by means of flat conductor paths, which are applied to the edge portion of the rear window (22).

4. The tailgate according to claim 1, **characterized in that** the edge portion of the rear window (22), which edge portion can be moved out of the tailgate body (18), has a frame with the additional stop light (24) being integrated therein.

5. The tailgate according to claim 1, **characterized in that** the electric power supply lines for the additional stop light (24) are integrated in the frame.

6. The tailgate according to one of claims 1 to 5, **characterized in that** a strengthening support for attaching the tailgate to a vehicle is formed merely by the tailgate body (18).

7. Vehicle with a tailgate according to one of claims 1 to 6, comprising a detachable body part (10) forming a rear part of the vehicle roof and the vehicle sides, which detachable body part is formed with a rear opening (14) for an abutment of the edge (28) of the closed rear window (22).

## Revendications

1. Hayon pour véhicule automobile, comprenant un corps de hayon inférieur (18), sur lequel est disposée une lunette arrière (22), sur la zone supérieure de laquelle un feu d'arrêt supplémentaire (24) est prévu, **caractérisé en ce que** la lunette arrière (22) est abaissable dans le corps de hayon inférieur (18), la lunette arrière étant suffisamment abaissable au moins lorsque le véhicule roule pour que sa zone supérieure munie du feu d'arrêt supplémentaire (24) dépasse du corps de hayon inférieur vers le haut.

2. Hayon selon la revendication 1, **caractérisé en ce que** le feu d'arrêt supplémentaire (24) est fixé par collage à la lunette arrière.

3. Hayon selon la revendication 1 ou 2, **caractérisé en ce que** l'alimentation électrique du feu d'arrêt s'effectue au moyen de pistes conductrices planes, qui sont appliquées sur la zone de bord de la lunette arrière (22).

4. Hayon selon la revendication 1, **caractérisé en ce que** la zone de bord de la lunette arrière (22) qui peut être retirée du corps de hayon (18) présente un cadre, dans lequel le feu d'arrêt supplémentaire (24) est intégré.

5. Hayon selon la revendication 4, **caractérisé en ce que** les lignes d'alimentation électrique pour le feu d'arrêt supplémentaire (24) sont intégrées dans le cadre.

6. Hayon selon l'une quelconque des revendications 1 à 5, **caractérisé en ce qu'**un renfort est formé pour fixer le hayon à un véhicule uniquement par l'intermédiaire du corps de hayon (18).

7. Véhicule automobile comportant un hayon selon l'une quelconque des revendications 1 à 6, comprenant une pièce de structure (10) démontable formant une partie arrière du toit du véhicule et des ailes du véhicule, laquelle pièce de structure est agencée à l'arrière avec une ouverture (14) pour installer le bord (28) de la lunette arrière (22) fermée.
